# EUROPÄISCHE PATENTSCHRIFT

(11) **EP 3 013 912 B1**
(45) Veröffentlichungstag und Bekanntmachung des Hinweises auf die Patenterteilung: **27.09.2017**
(21) Anmeldenummer: 14732202.8
(22) Anmeldetag: 24.06.2014
(51) Int. Cl.: C09D 155/02, B29C 45/14, B29C 45/16, C09D 4/06, C09D 5/00, C08J 5/18, C08L 55/02, B32B 25/08, B32B 25/06

(54) **METALLISIERBARE, KRATZFESTE UND LÖSEMITTELBESTÄNDIGE FOLIE**
METALLIZABLE, SCRATCH-RESISTANT AND SOLVENT-RESISTANT FILM
FILM MÉTALLISABLE, RÉSISTANT AUX ÉGRATIGNURES ET RÉSISTANT AUX SOLVANTS

(30) Priorität: 27.06.2013 EP 13173948
(43) Veröffentlichungstag der Anmeldung: 04.05.2016
(73) Patentinhaber: Covestro Deutschland AG, 51373 Leverkusen (DE)
(72) Erfinder: KOSTROMINE, Serguei, 53913 Swisttal-Buschhoven (DE); PETZOLDT, Joachim, 40789 Monheim (DE); KÜNZEL, Roland, 51381 Leverkusen (DE); LEONHART, Konstantin, 41515 Gervenbroich (DE)
(74) Vertreter: Levpat
(86) Internationale Anmeldenummer: PCT/EP2014/063218
(87) Internationale Veröffentlichungsnummer: WO 2014/206958

(56) Entgegenhaltungen:
- WO-A2-2008/043812
- DE-A1- 19 956 483
- DE-A1-102004 009 437
- US-A- 4 537 805

## Beschreibung

Die vorliegende Erfindung betrifft ein ABS-Polymere umfassendes Beschichtungsmittel und mit diesem Beschichtungsmittel beschichtete Folien. Die Oberflächen der beschichteten Folien sind metallisierbar und weisen darüber hinaus eine besondere Kratzfestigkeit und Lösemittelbeständigkeit auf. Des Weiteren betrifft die vorliegende Erfindung 3D-Kunststoffteile, umfassend die erfindungsgemäße Folie sowie die Verwendung der erfindungsgemäßen Folien zur Herstellung von Kunststoffteilen in film insert molding-Verfahren.

Für die Herstellung von Kunststoffteilen im Spritzgussverfahren hat sich die Film-Insert-Molding-Technologie etabliert. Sie sieht vor, dass die Frontoberfläche eines Teiles zuerst aus einer beschichteten Folie zwei- oder dreidimensional vorgefertigt wird und danach mit einer Kunststoffschmelze von der Rückseite gefüllt bzw. hinterspritzt wird.

Dabei ist es oft erwünscht, dass die Frontseite gegen chemische und mechanische Einwirkungen ausreichend geschützt ist. Dieses wird im Stand der Technik oftmals durch eine entsprechende Beschichtung oder Lackierung der Oberfläche erreicht. Um eine Nassbeschichtung der fertigen dreidimensionalen Teile zu vermeiden, ist es dabei vorteilhaft, dass eine solche Lackierung oder Beschichtung schon auf der Folie aufgebracht sein soll, welche dann mit der Folie alle weiteren Umformungsschritte durchläuft und danach endgültig ausgehärtet wird, wie beispielsweise durch UV-Belichtung.

Daraus entsteht ein ganz spezielles Eigenschaftsprofil für beschichtete Folien, die zu dieser Technologie passen. Im Stand der Technik hat sich für diese Produktklasse der Begriff *"Formable Hardcoating"* durchgesetzt, nämlich eine Folienbeschichtung, die zuerst ausreichend blockfest ist, sich dann aber zusammen mit dem Substrat thermisch beliebig verformen lässt und am Ende durch UV-Härten die Eigenschaften einer Schutzschicht bekommt.

Ein solche Eigenschaftskombination im Sinne von Blockfestigkeit und thermoplastischem Verhalten der primären Beschichtung zusammen mit dem großen latenten Potential zur UV-Vernetzung ist schwer zu realisieren.

Die meisten Lösungsansätze für diese Aufgabenstellung im Stand der Technik umfassen den Einsatz von Makromonomeren, die hauptsächlich durch *Dual-Cure*-Verfahren hergestellt werden, wie es unter anderem beschrieben ist in Beck, Erich (BASF), Scratch resistant UV coatings for automotive applications, Pitture e Vernici, European Coatings (2006), 82(9), 10-19; Beck, Erich, Into the third dimension: three ways to apply UV coating technology to 3D-automotive objects, European Coatings Journal (2006), (4), 32, 34, 36, 38-39; Petzoldt, Joachim; Coloma, Fermin (BMS), New three-dimensionally formable hardcoat films, JOT, Journal fuer Oberflaechentechnik (2010), 50(9), 40-42; EP 2113527 A1; Petzoldt et al., Development of new generation hardcoated films for complex 3D-shaped FIM applications, RadTech Asia 2011, Conference Proceedings.

Nach dem Hinterspritzen dieser Folienprodukte mit beispielsweise Polycarbonat-Schmelze (*Film insert Molding*) entstehen die gewünschten Kunststoffteile.

Des Weiteren existiert hauptsächlich aus Design-Gründen ein starker Bedarf, solche Kunststoffteile, die im Auto, in jeglichen anderen Transportmitteln, Elektro- und Elektronikgeräten, Haushaltsgeräten, Sanitärartikeln, Möbelindustrie und in der Schmuck-Industrie einen breiten Einsatz finden, mit einer Metallschicht wie insbesondere einer Chromschicht versehen zu können. Auf diese Weise werden die Vorteile des Kunststoffs wie beispielsweise die freie Formgebung und das geringe Gewicht mit der hochwertigen Optik von Metalloberflächen verbunden. Von Interesse sind auch partiell metallisierte Bauteile, wobei Teilflächen für Embleme, Skalen oder Sichtfenster ohne Metallisierung belassen werden. Diese Flächen müssen die hohen Anforderungen an Medienresistenz wie beispielsweise gegenüber Hautcremes, Cockpitpflegemitteln, Lösemitteln und einer gewissen Kratzbeständigkeit bestehen, welche an beschichtete Kunststoffteile gestellt werden. Unbeschichtete Thermoplasten, wie beispielsweise das für die gewünschte Galvanisierung sehr gut geeignete Acrylonitril-Butadien-Styrol-Copolymer (ABS), sind in Bezug auf die Lösemittel- und Kratzfestigkeit unzureichend, zum Beispiel gemessen an üblichen Anforderungen für den Auto-Innenraum oder höherwertige Elektro- und Elektronikgeräte.

Der Prozess der Galvanisierung von Kunststoffen ist in der Literatur detailliert beschrieben, wie beispielsweise in B. D. Rathmann in Chemie in unserer Zeit 15 (6) 1981, Seite 201 ff. und D. Bernd in Kunststoffgalvanisierung in der Praxis, Crashkurs Kunststoffinstitut Lüdenscheid 2012, Tagungsband. Es ist im Stand der Technik bekannt, dass die sich am besten für eine solche Galvanisierung eignenden Kunststoffe ABS-Copolymere umfassen. Polycarbonat/ABS-Coextrusionsfolien, wie sie beispielsweise in der WO 2012/120007 A1 beschrieben sind, sind in zweierlei Hinsicht verbesserungswürdig: Bedingt durch den Coextrusionsprozess können solche ABS-Schichten nicht dünner als 15-20 µm sein. Bei Dicken von 20 µm aufwärts sind diese Schichten nicht so transparent, wie es bei manchen Anwendungen gewünscht wäre. Außerdem erfüllen solche ABS-Schichten nicht die geschilderten Anforderungen an eine Lösemittelbeständigkeit und können daher nicht als Schutzschicht für Kunststoffteile betrachtet werden, wie es von einer die Oberfläche der Folie bzw. eines Formteiles daraus bildende Schicht eigentlich erwartet wird.

WO,A,2014 198751 (Artikel 54(3) EPÜ) beschreibtt ein Beschichtungsmitel. Aus diesen Gründen besteht in der Technik ein großer Bedarf an beschichteten Folien, deren Beschichtung zum einen nach dem Auftragen und ersten Trocknen hinreichend blockfest für die weitere Verarbeitung ist und zum anderen nach dem Härten durch beispielsweise UV-Licht eine gewisse Kratzfestigkeit und Lösemittelbeständigkeit aufweist und darüber hinaus noch galvanisierbar ist. Das Erfüllen eines solchen Anforderungsprofils mit der erwähnten Kombination von Eigenschaften stellt eine besondere Herausforderung an den Fachmann dar.

Es wurde überraschenderweise festgestellt, dass thermisch verformbare Folien mit einer solchen Eigenschaftskombination der beschichteten Oberfläche erhalten werden können, wenn sie mit einem Beschichtungsmittel beschichtet werden, das mindestens ein thermoplastisches Acrylonitril-Butadien-Styrol-Copolymer in einem Gehalt von mindestens 30 Gew.-% des Festanteils des Beschichtungsmittels, mindestens einen UV-härtbaren Reaktivverdünner in einem Gehalt von mindestens 30 Gew.-% des Festanteils des Beschichtungsmittels, mindestens einen Fotoinitiator in einem Gehalt von ≥ 0,1 bis ≤ 10 Gewichtsteilen des Festanteils des Beschichtungsmittels und mindestens ein organisches Lösungsmittel umfasst und der Anteil an ethylenisch ungesättigten Gruppen mindestens 3 mol pro kg des Festanteils des Beschichtungsmittels beträgt.

Die vorliegende Erfindung stellt daher folgendes bereit: Ein Beschichtungsmittel, umfassend
(a) mindestens ein thermoplastisches Acrylonitril-Butadien-Styrol-Copolymer in einem Gehalt von mindestens 30 Gew.-% des Festanteils des Beschichtungsmittels;
(b) mindestens einen UV-härtbaren Reaktivverdünner in einem Gehalt von mindestens 30 Gew.-% des Festanteils des Beschichtungsmittels;
(c) mindestens einen Fotoinitiator in einem Gehalt von ≥ 0,1 bis ≤ 10 Gewichtsteilen des Festanteils des Beschichtungsmittels; und
(d) mindestens ein organisches Lösungsmittel,
wobei der Anteil an ethylenisch ungesättigten Gruppen mindestens 3 mol pro kg des Festanteils des Beschichtungsmittels beträgt, und wobei das Acrylnitril-Butadien-Styrol-Copolymer (a) einen Acrylnitril-Anteil im Bereich von ≥ 19 % und ≤ 35 % aufweist.

Das erfindungsgemäße Beschichtungsmittel kann einfach und effizient erhalten werden. Zusätzlich lassen sich damit erhältliche Beschichtungen auf vielen Oberflächen wie insbesondere die der für die im Film insert molding-Verfahren in Frage kommenden Folien wie gewünscht galvanisieren bzw. mit einer Metallschicht überziehen. Überraschenderweise sind die mit dem erfindungsgemäßen Beschichtungsmittel erhaltenen Schichten darüber hinaus nach dem Trocknen ausreichend blockfest, lassen sich dann zusammen mit dem beschichteten Substrat thermisch beliebig verformen und bekommen nach Härtung wie beispielsweise durch UV-Strahlung eine kratzfeste und lösemittelbeständige Oberfläche.

Die Kratzfestigkeit lässt sich beispielsweise anhand der Bleistifthärte bestimmen, wie sie in Anlehnung an ASTM D 3363 gemessen werden kann. Eine Bewertung der Lösemittelbeständigkeit kann in Anlehnung an EN ISO 2812-3:2007 erfolgen. Bemerkenswert ist, dass die durch das erfindungsgemäße Beschichten der Folie mit dem Beschichtungsmittel und abschließendem Härten durch UV-Strahlung erhaltene Oberfläche des Formkörpers selbst gegenüber dem sonst für Polycarbonat-Oberflächen sehr schädlichen Lösungsmittel Aceton eine gute Beständigkeit aufweist.

Acrylonitril-Butadien-Styrol-Copolymere, wie sie im erfindungsgemäßen Beschichtungsmittel verwendet werden, sind unter der Kurzbezeichnung ABS (DIN EN ISO 1043-1 und DIN ISO 1629) allgemein bekannte Thermoplaste. Der Vicat-Softening-Punkt (ISO 306 VST/B/50 (50 N)) der erfindungsgemäß einzusetzenden ABS-Copolymere liegt bevorzugt um 100 °C, besonders bevorzugt bei mindestens 95°C wie im Anspruch 4 definiert. Bevorzugt sind ABS-Copolymere mit einem Acrylnitril-Anteil im Bereich von ≥ 20 bis ≤ 30 %, besonders bevorzugt im Bereich von ≥ 22 bis ≤ 25 %. Der Anteil des Polybutadiens in den ABS-Copolymeren liegt bevorzugt im Bereich von ≥ 10 bis ≤ 16%, besonders bevorzugt in Kombination mit den bevorzugten Bereichen des Acrylnitril-Anteils. Der Rest der jeweiligen Anteile in den ABS-Copolymeren umfasst polymerisierte Styrol-Derivate. Bevorzugt dabei ist Styrol.

ABS-Copolymere sind als Handelsprodukte in großen Mengen auf dem Markt. Bekannte und im Rahmen der vorliegenden Erfindung vorteilhaft verwendbare Produkte sind unter anderem unter den Handelsmarken Novodur (Hersteller Styrolution) und Magnum (Hersteller Styron) erhältlich. Besonders bevorzugt davon ist Novodur N H604.

Das Polymer ist ein wesentlicher Teil des erfindungsgemäßen Beschichtungsmittels und der erfindungsgemäßen Beschichtung. Der Anteil des mindestens einen ABS-Copolymers beträgt im Festanteil des Beschichtungsmittels mindestens 30 Gew.-%, bevorzugt mindestens 40 Gew.-%, besonders bevorzugt mindestens 45 Gew.-%.

Als Komponente (b) des erfindungsgemäßen Beschichtungsmittel sind als Reaktivverdünner bifunktionelle, trifunktionelle, tetrafunktionelle, pentafunktionelle und/oder hexafunktionelle Acryl- und/oder Methacrylmonomere bevorzugt einsetzbar. Vorzugsweise handelt es sich um Esterfunktionen, insbesondere Acrylesterfunktionen. Geeignete mehrfunktionelle Acryl- und/oder Methacrylsäureester leiten sich von aliphatischen Polyhydroxyverbindungen mit wenigstens 2, vorzugsweise wenigstens 3 und besonders bevorzugt wenigstens 4 Hydroxygruppen und vorzugsweise 2 bis 12 Kohlenstoffatomen ab.

Beispiele solcher aliphatischen Polyhydroxyverbindungen sind Ethylenglykol, Propylenglykol, Butandiol-1,4, Hexandiol-1,6, Diethylenglykol, Triethylenglykol, Glycerin, Trimethylolpropan, Pentaerythrit, Dipentaerythrit, Tetramethylolethan und Sorbitan. Beispiele für sich als bi- bis hexafunktionelle Acryl- und/oder Methacrylmonomere zum Reaktivverdünner erfindungsgemäß bevorzugt eignende Ester der genannten Polyhydroxyverbindungen sind Glykoldiacrylat und - dimethacrylat, Butandioldiacrylat oder -dimethacrylat, Dimethylolpropandiacrylat oder - dimethacrylat, Diethylenglykoldiacrylat oder -dimethacrylat, Divinylbenzol, Trimethylolpropantriacrylat oder -trimethacrylat, Glycerintriacrylat oder -trimethacrylat, Pentaerythrittetraacrylat oder -tetramethacrylat, Dipentaerythritpenta/hexaacrylat (DPHA), 1,2,3,4-Butantetraoltetraarcylat oder - tetramethacrylat, Tetramethylolethantetraacrylat oder -tetramethacrylat, 2,2-Dihydroxy-propandiol-1,3-tetraacrylat oder -tetramethacrylat, Diurethandimethacrylat (UDMA), Sorbitan-tetra-, -penta- oder -hexaacrylat oder die entsprechenden Methacrylate. Es können auch Gemische von vernetzenden Monomeren mit zwei bis vier oder mehr ethylenisch ungesättigten, radikalisch polymerisierbaren Gruppen mitverwendet werden.

Weiter erfindungsgemäß als Reaktivverdünner bzw. als Komponente b) des erfindungsgemäßen Beschichtungsmittels können alkoxylierte Di-, Tri-, Tetra-, Penta- und Hexacrylate oder - methacrylate verwendet werden. Beispiele für alkoxylierte Diacrylate oder -methacrylate sind alkoxyliertes, bevorzugt ethoxyliertes Methandioldiacrylat, Methandioldimethacrylat, Glycerindiacrylat, Glycerindimethacrylat, Neopentylglycoldiacrylat, Neopentylglycoldimethacrylat, 2-Butyl-2-Ethyl-1,3-Propandioldiacrylate, 2-Butyl-2-Ethyl-1,3-Propandioldimethacrylat, Trimethylolpropandiacrylat oder Trimethylolpropandimethacrylat. Beispiele für alkoxylierte Triacrylate oder -methacrylate sind alkoxyliertes, bevorzugt ethoxyliertes Pentaerythrittriacrylat, Pentaerythrittrimethacrylat, Glycerintriacrylat, Glycerintrimethacrylat, 1,2,4-Butantrioltriacrylat, 1,2,4-Butantrioltrimethacrylat, Trimethylolpropantriacrylat, Trimethylolpropantrimethacrylat, Tricyclodecandimethanoldiacrylat, Tricyclodecandimethanoldimethacrylat, Ditrimethylolpropantetraacrylat oder Ditrimethylolpropantetramethacrylat.
Beispiele für alkoxylierte Tetra-, Penta- oder Hexaacrylate sind alkoxyliertes, bevorzugt ethoxyliertes Pentaerythrittetraacrylat, Dipentaerythrittetraacrylat, Dipentaerythritpentaacrylat, Dipentaerythrithexaacrylat, Pentaerythrittetramethacrylat, Dipentaerythrittetramethacrylat, Dipentaerythritpentamethacrylat oder Dipentaerythrithexamethacrylat.
In den alkoxylierten Diacrylaten oder -methacrylaten, Triacrylaten oder -methacrylaten, Tetraacrylaten oder -methacrylaten, Pentaacrylaten oder -methacrylaten und/oder alkoxylierten Hexaacrylaten oder -methacrylaten der Komponente b) können alle Acrylatgruppen oder Methacrylatgruppen oder nur ein Teil der Acrylatgruppen oder Methacrylatgruppen im jeweiligen Monomer über Alkylenoxidgruppen an den entsprechenden Rest gebunden sein. Es können auch beliebige Mischungen solcher ganz oder teilweise alkoxylierten Di-, Tri-, Tetra-, Penta- oder Hexaacrylate bzw. -methacrylate eingesetzt werden. Dabei ist es auch möglich, das die Acrylat- oder Methacrylatgruppe(n) über mehrere aufeinanderfolgende Alkylenoxidgruppen, vorzugsweise Ethylenoxidgruppen an den aliphatischen, cycloaliphatischen oder aromatischen Rest des Monomeren gebunden sind. Die mittlere Anzahl der Alkylenoxid- bzw Ethylenoxidgruppen im Monomer wird durch den Alkoxylierungsgrad bzw. Ethoxylierungsgrad angegeben. Der Alkoxylierungsgrad bzw. Ethoxylierungsgrad kann bevorzugt von 2 bis 25 betragen, besonders bevorzugt sind Alkoxylierungsgrade bzw. Ethoxylierungsgrade von 2 bis 15, ganz besonders bevorzugt von 3 bis 9.

Ebenso erfindungsgemäß als Reaktivverdünner bzw. als Komponente b) des erfindungsgemäßen Beschichtungsmittels können Oligomere dienen, die zur Klasse der aliphatischen Urethanacrylate beziehungsweise der Polyesteracrylate oder Polyacrylacrylate gehören. Deren Verwendung als Lackbindemittel ist bekannt und ist in Chemistry & Technology of UV & EB Formulation for Coatings, Inks & Paints, Vol. 2, 1991, SITA Technology, London (P.K.T: Oldring (Ed.) auf S.73-123 (Urethane Acrylates) bzw. S.123-135 (Polyester Acrylates) beschrieben. Kommerziell erhältlich und geeignet im erfindungsgemäßen Sinne sind hier beispielsweise aliphatische Urethanacrylate wie Ebecryl® 4858, Ebecryl® 284, Ebecryl® 265, Ebecryl® 264, Ebecryl® 8465, Ebecryl® 8402 (Hersteller jeweils Cytec Surface Specialities), Craynor® 925 von Cray Valley, Viaktin® 6160 von Vianova Resin, Desmolux VP LS 2265 von Bayer MaterialScience AG, Photomer 6891 von Cognis oder auch in Reaktivverdünnern gelöste aliphatische Urethanacrylate wie Laromer® 8987 (70%ig in Hexandioldiacrylat) von BASF AG, Desmolux U 680 H (80%ig in Hexandioldiacrylat) von Bayer MaterialScience AG, Craynor® 945B85 (85% in Hexandioldiacrylat), Ebecryl® 294/25HD (75% in Hexandioldiacrylat), Ebecryl® 8405 (80% in Hexandioldiacrylat), Ebecryl® 4820 (65% in Hexandioldiacrylat) (Hersteller jeweils Cytec Surface Specialities) und Craynor® 963B80 (80% in Hexandioldiacrylat) jeweils von Cray Valley oder auch Polyesteracrylate wie Ebecryl® 810, 830 oder Polyacrylacrylate wie Ebecryl®, 740, 745, 767 oder 1200 von Cytec Surface Specialities.

In einer weiteren bevorzugten Ausführungsform umfasst der Reaktivverdünner (b) alkoxylierte Diacrylate und/oder Dimethacrylate, alkoxylierte Triacrylate und/oder Trimethacrylate, alkoxylierte Tetraacrylate und/oder Tetramethacrylate, alkoxylierte Pentaacrylate und/oder Pentamethacrylate, alkoxylierte Hexaacrylate und/oder Hexamethacrylate, aliphatische Urethanacrylate, Polyesteracrylate, Polyacrylacrylate und Gemische davon.

In einer weiteren bevorzugten Ausführungsform umfasst der Reaktivverdünner (b) des erfindungsgemäßen Beschichtungsmittels Dipentaerythritol penta/hexa-acrylat.

Auch erfindungsgemäß sind Gemische der oben genannten vernetzenden multifunktionellen Monomere mit monofunktionellen Monomeren wie insbesondere Methylmethacrylat. Der Anteil der multifunktionellen Monomere in einem solchen Gemisch beträgt bevorzugt mindestens 20 Gew.-%.

Der Reaktivverdünner ist ein wesentlicher Teil des erfindungsgemäßen Beschichtungsmittels und der erfindungsgemäßen Beschichtung. Der Anteil des mindestens einen Reaktivverdünners insgesamt beträgt im Festanteil des Beschichtungsmittels mindestens 30 Gew.-%, bevorzugt mindestens 40 Gew.-%, besonders bevorzugt mindestens 45 Gew.-%.

Der Gehalt an ethylenisch ungesättigten Gruppen hat wesentlichen Einfluss auf die erreichbaren Beständigkeitseigenschaften der mit Strahlung gehärteten Beschichtung. Daher enthält das erfindungsgemäße Beschichtungsmittel einen Gehalt an ethylenisch ungesättigten Gruppen von mindestens 3,0 mol pro kg Festgehalt des Beschichtungsmittels, bevorzugt mindestens 3,5 mol pro kg, besonders bevorzugt mindestens 4,0 mol pro kg Festgehalt des Beschichtungsmittels. Dieser Gehalt an ethylenisch ungesättigten Gruppen ist dem Fachmann auch unter dem Begriff der Doppelbindungsdichte wohlbekannt.

Der Begriff des mindestens einen Fotoinitiators des erfindungsgemäßen Beschichtungsmittel umfasst die gängigen dem Fachmann bekannten, kommerziell erhältlichen Verbindungen wie z. B. α-Hydroxyketone, Benzophenon, α,α-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Methyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, 2,4,6-Trimethylbenzoyldiphenylphosphinoxid, Bisacylphosphinoxid und andere, wobei die genannten Photoinitiatoren allein oder in Kombination von zwei oder mehreren oder in Kombination mit einem der obigen Polymerisationsinitiatoren benutzt werden können.

Als UV-Fotoinitiatoren können beispielsweise die IRGACURE®-Typen von BASF eingesetzt werden, so beispielsweise die Typen IRGACURE® 184, IRGACURE® 500, IRGACURE® 1173, IRGACURE®2959, IRGACURE® 745, IRGACURE® 651, IRGACURE® 369, IRGACURE® 907, IRGACURE® 1000, IRGACURE® 1300, IRGACURE® 819, IRGACURE® 819DW, IRGACURE® 2022, IRGACURE® 2100, IRGACURE® 784, IRGACURE® 250, ferner können die DAROCUR®-Typen von BASF eingesetzt werden, so beispielsweise die Typen DAROCUR® MBF, DAROCUR® 1173, DAROCUR® TPO, DAROCUR® 4265. Ein anderes Beispiel eines im erfindungsgemäßen Beschichtungsmittel einsetzbaren UV-Photoinitiators ist unter dem Handelsnamen Esacure One von dem Hersteller Lamberti zu beziehen.

Fotoinitiatoren sind im Bereich von ≥ 0,1 bis ≤ 10 Gewichtsteilen des Feststoffgehaltes des Beschichtungsmittels im Beschichtungsmittel enthalten.

Das Beschichtungsmittel soll zudem über die 100 Gew.-Teile der Komponenten (a), (b) und (c) hinaus ein oder mehrere organische Lösungsmittel enthalten.

Als Lösungsmittel sind dabei besonders diejenigen geeignet, die Polycarbonat-Polymere nicht angreifen. Solche Lösungsmittel sind bevorzugt Alkohole. In einer bevorzugten Ausführungsform der vorliegenden Erfindung ist das Lösungsmittel (d) ausgewählt aus 1-Methoxy-2-propanol, Diacetonalkohol, 2,2,3,3-Tetrafluoropropanol und Gemischen davon. Ganz besonders bevorzugt umfasst das mindestens eine Lösungsmittel (d) ein Gemisch aus 1-Methoxy-2-propanol und mindestens 50 Gew.-% Diacetonalkohol.

Die Lackzusammensetzung enthält somit bevorzugt zusätzlich zu den 100 Gew.-Teilen der Komponenten (a) bis (c) bis 900 Gew.-Teile, besonders bevorzugt 100 bis 850 Gew.-Teile, ganz besonders bevorzugt 200 bis 800 Gew.-Teile des wenigstens einen organischen Lösungsmittels.

Das Beschichtungsmittel kann zudem über die 100 Gew.-Teile der Komponenten (a), (b) und (c) hinaus optional ein oder mehrere weitere Lackadditive enthalten. Solche Lackadditive können beispielsweise ausgewählt sein aus der Gruppe enthaltend Stabilisatoren, Verlaufsmittel, Oberflächenadditive, Pigmente, Farbstoffe, anorganische Nanopartikel, Haftvermittler, UV-Absorber, IR-Absorber, bevorzugt aus der Gruppe enthaltend Stabilisatoren, Verlaufsmittel, Oberflächenadditive und anorganische Nanopartikel. Das Beschichtungsmittel kann bevorzugt zusätzlich zu den 100 Gew.-Teilen der Komponenten 1) bis 3) 0 bis 40 Gew.-Teile, besonders bevorzugt 0 bis 30 Gew.-Teile, ganz besonders bevorzugt 0,1 bis 20 Gew.-Teile wenigstens eines weiteren Lackadditivs enthalten. Bevorzugt beträgt der Gesamtanteil aller in der Lackzusammensetzung enthaltenen Lackadditive 0 bis 40 Gew.-Teile, besonders bevorzugt 0 bis 30 Gew.-Teile, ganz besonders bevorzugt 0,1 bis 20 Gew.-Teile.

Die Lackzusammensetzung kann anorganische Nanopartikel zur Erhöhung der mechanischen Beständigkeit, wie beispielsweise der Kratzfestigkeit und/oder Bleistifthärte enthalten.

Als Nanopartikel kommen anorganische Oxide, Mischoxide, Hydroxide, Sulfate, Carbonate, Carbide, Boride und Nitride von Elementen der II bis IV Hauptgruppe und/oder Elementen der I bis VIII Nebengruppe des Periodensystems einschließlich der Lanthanide in Frage. Bevorzugte Nanopartikel sind Siliziumoxid-, Aluminiumoxid-, Ceroxid-, Zirkonoxid-, Nioboxid-, Zinkoxid- oder Titanoxid-Nanopartikel, besonders bevorzugt sind Siliziumoxid-Nanopartikel.

Die eingesetzten Partikel weisen vorzugsweise mittlere Partikelgrößen (gemessen mittels dynamischer Lichtstreuung in Dispersion bestimmt als Z-Mittelwert) kleiner 200 nm, bevorzugt von 5 bis 100 nm, besonders bevorzugt 5 bis 50 nm auf. Bevorzugt weisen wenigstens 75%, besonders bevorzugt wenigstens 90%, ganz besonders bevorzugt wenigstens 95% aller eingesetzten Nanopartikel die vorstehend definierten Größen auf.

Das Beschichtungsmittel kann auf einfache Weise hergestellt werden, indem das Polymer in dem Lösemittel bei Raumtemperatur oder bei erhöhten Temperaturen vorerst komplett gelöst bzw. kolloidal dispergiert wird und dann der bis auf Raumtemperatur abgekühlten Lösung die anderen obligatorischen und gegebenenfalls die optionalen Komponenten entweder in Abwesenheit von Lösungsmittel(n) zusammen gegeben und durch Rühren miteinander vermischt werden oder in Anwesenheit von Lösungsmittel(n) beispielsweise in das oder die Lösungsmittel gegeben und durch Rühren miteinander vermischt werden. Bevorzugt wird zuerst der Fotoinitiator in dem oder den Lösungsmitteln gelöst und anschließend die weiteren Komponenten hinzugegeben. Gegebenenfalls erfolgt anschließend noch eine Reinigung mittels Filtration, vorzugsweise mittels Feinfiltration.

Ein weiterer Gegenstand der vorliegenden Erfindung betrifft einen Schichtkörper, umfassend ein Substrat und eine Oberflächenbeschichtung, die erhältlich ist durch Beschichten des Substrates mit dem Beschichtungsmittel gemäß der vorliegenden Erfindung. Dabei wird erfindungsgemäß ein beschichtetes Substrat mit vorteilhaften Eigenschaften der Oberfläche hinsichtlich Kratzfestigkeit, Lösemittelbeständigkeit und metallisierbarer Oberfläche bereitgestellt.

Da die Metallisierung von Oberflächen auf dem Gebiet der Herstellung von Kunststoffteilen mittels des film insert molding-Verfahrens von besonderer Bedeutung ist und durch die vorliegende Erfindung vorteilhafterweise eine Verbesserung erreicht wird, umfasst das zu beschichtende Substrat gemäß der vorliegenden Erfindung bevorzugt eine Folie.

Daher ist ein weiterer Gegenstand der vorliegenden Erfindung eine beschichtete Folie, umfassend eine Folie aus einem thermoplastischem Polymer und einer Beschichtung, die erhältlich ist durch Beschichten mit dem erfindungsgemäßen Beschichtungsmittel.

Als zu beschichtende Folien werden bevorzugt Thermoplasten wie Polycarbonat, Polyacrylat oder Poly(meth)acrylat, Polysulfone, Polyester, thermoplastisches Polyurethan und Polystyrol sowie deren Copolymere und Mischungen (Blends) eingesetzt. Geeignete Thermoplasten sind beispielsweise Polyacrylate, Poly(meth)acrylate (z.B. PMMA; z.B. Plexiglas® des Herstellers Röhm), Cycloolefin-Copolymere (COC; z.B. Topas® des Herstellers Ticona; Zenoex® des Herstellers Nippon Zeon oder Apel® des Herstellers Japan Synthetic Rubber), Polysulfone (Ultrason@ des Herstellers BASF oder Udel® des Herstellers Solvay), Polyester, wie z.B. PET oder PEN, Polycarbonat (PC), Polycarbonat/Polyester-Blends, z.B. PC/PET, Polycarbonat/Polycyclohexylmethanolcyclo-hexandicarboxylat (PCCD; Xylecs® von der Fa GE), Polycarbonat/PBT und Mischungen daraus.

In einer besonders vorteilhaften und bevorzugten Ausführungsform der vorliegenden Erfindung umfasst die Folie des erfindungsgemäßen Schichtkörpers bzw. das thermoplastische Polymer der erfindungsgemäßen beschichteten Folie Polycarbonat oder Copolycarbonat.

Geeignete Polycarbonate für die Herstellung der erfindungsgemäßen Polycarbonatzusammensetzungen sind alle bekannten Polycarbonate. Dies sind Homopolycarbonate, Copolycarbonate und thermoplastische Polyestercarbonate. Die geeigneten Polycarbonate haben bevorzugt mittlere Molekulargewichte M̅_{w} von 18.000 bis 40.000, vorzugsweise von 26.000 bis 36.000 und insbesondere von 28.000 bis 35.000, ermittelt durch Messung der relativen Lösungsviskosität in Dichlormethan oder in Mischungen gleicher Gewichtsmengen Phenol/o-Dichlorbenzol geeicht durch Lichtstreuung.

Die Herstellung der Polycarbonate erfolgt vorzugsweise nach dem Phasengrenzflächenverfahren oder dem Schmelze-Umesterungsverfahren, welche mannigfaltig in der Literatur beschrieben werden. Zum Phasengrenzflächenverfahren sei beispielhaft auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen. Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate können aus Reaktionen von Bisphenolverbindungen mit Kohlensäureverbindungen, insbesondere Phosgen oder beim Schmelzeumesterungsprozess Diphenylcarbonat bzw. Dimethylcarbonat, erhalten werden. Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt. Weitere Bisphenolverbindungen, die sich für die Polycarbonatsynthese einsetzen lassen, sind unter anderem offenbart in WO 2008/037364 A1, EP 1 582 549 A1, WO 2002/026862 A1 und WO 2005/113639 A1.

Die Polycarbonate können linear oder verzweigt sein. Es können auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US 4 185 009 B1, DE 25 00 092 A1, DE 42 40 313 A1, DE 19 943 642 A1, US 5 367 044 B1 sowie in hierin zitierter Literatur. Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP 1 506 249 A1 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die Kunststoffzusammensetzung(en) der Folie bzw. des thermoplastischen Polymers des 3D-Formkörpers können zusätzlich Additive, wie beispielsweise UV-Absorber, IR-Absorber sowie andere übliche Verarbeitungshilfsmittel, insbesondere Entformungsmittel und Fließmittel, sowie die üblichen Stabilisatoren, insbesondere Thermostabilisatoren sowie Antistatika, Pigmente, Farbmittel und optische Aufheller enthalten. In jeder Schicht können dabei unterschiedliche Additive bzw. Konzentrationen von Additiven vorhanden sein.

Beschichtungen, die erhältlich sind durch Beschichten mit dem erfindungsgemäßen Beschichtungsmittel, also auch die erfindungsgemäßen beschichteten Folien, eignen sich besonders vorteilhaft für die Beschichtung mit einer Metallschicht. In einer weiteren bevorzugten Ausführungsform umfasst daher die erfindungsgemäße beschichtete Folie eine Metallschicht auf der beschichteten Oberfläche. Bevorzugt umfasst die Metallschicht mindestens ein Metall, das ausgewählt ist aus der Gruppe bestehend aus Zinn, Blei, Silber, Gold, Palladium, Platin, Kobalt, Mangan, Bismut, Kupfer, Nickel, Eisen, Chrom sowie Gemischen davon, bevorzugt Nickel, Silber, Gold, Palladium, Platin, Kupfer und Chrom, besonders bevorzugt Nickel, Gold, Palladium, Kupfer und Chrom.

Ein weiterer Gegenstand der vorliegenden Erfindung betrifft ein Verfahren zur Herstellung einer beschichteten Folie, umfassend die Schritte
(i) Beschichten einer Folie mit einem Beschichtungsmittel gemäß der vorliegenden Erfindung;
(ii) Trocknen der Beschichtung;
(iii) gegebenenfalls zurechtschneiden, dekaschieren, bedrucken und/oder thermisches oder mechanisches Verformen der Folie; und
(iv) Bestrahlen der Beschichtung mit UV-Strahlung, dabei Härten der Beschichtung.

Das Beschichten der Folie mit dem Beschichtungsmittel kann dabei nach den gängigen Verfahren der Beschichtung von Folien mit flüssigen Beschichtungsmitteln erfolgen, wie beispielsweise durch Rakeln, Spritzen, Gießen, Fluten, Tauchen, Sprühen, Aufwalzen oder Aufschleudern. Das Flutverfahren kann manuell mit Schlauch oder geeignetem Beschichtungskopf oder automatisch im Durchlauf über Flutlackierroboter- und gegebenenfalls Schlitzdüsen erfolgen. Bevorzugt wird eine Auftragung des Beschichtungsmittels über eine Übertragung Rolle auf Rolle. Die Oberfläche der zu beschichtenden Folie kann dabei durch Reinigung oder Aktivierung vorbehandelt sein.

Das Trocknen schließt sich an die Applikation des Beschichtungsmittels auf die Folie an. Hierzu wird insbesondere mit erhöhten Temperaturen in Öfen und mit bewegter und gegebenenfalls auch entfeuchteter Luft wie beispielsweise in Konvektionsöfen oder mittels Düsentrocknern sowie Wärmestrahlung wie IR und/oder NIR gearbeitet. Weiterhin können Mikrowellen zum Einsatz kommen. Es ist möglich und vorteilhaft, mehrere dieser Trocknungsverfahren zu kombinieren. Das Trocknen der Beschichtung im Schritt (ii) umfasst bevorzugt das Ablüften bei Raumtemperatur und/oder erhöhter Temperatur, wie vorzugsweise bei 20 - 200 °C, besonders bevorzugt bei 40 - 120°C. Nach dem Trocknen der Beschichtung ist diese blockfest, so dass das beschichtete Substrat, insbesondere die beschichtete Folie kaschiert, bedruckt, und/oder thermisch verformt werden kann. Insbesondere das Verformen ist dabei bevorzugt, da hier schon durch das Verformen einer beschichteten Folie die Form für ein film insert molding-Verfahren zur Herstellung eines dreidimensionalen Kunststoffteils vorgegeben werden kann.

Vorteilhafterweise werden die Bedingungen für die Trocknung so gewählt, dass durch die erhöhte Temperatur und/oder die Wärmestrahlung keine Polymerisation (Vernetzung) der Acrylat- oder Methacrylatgruppen ausgelöst wird, da dieses die Verformbarkeit beeinträchtigen kann. Weiterhin ist die maximal erreichte Temperatur zweckmäßigerweise so niedrig zu wählen, dass sich die Folie nicht unkontrolliert verformt.

Nach dem Trocknungs-/Härtungsschritt kann die beschichtete Folie, gegebenenfalls nach Kaschierung mit einer Schutzfolie auf der Beschichtung, aufgerollt werden. Das Aufrollen kann geschehen, ohne dass es zum Verkleben der Beschichtung mit der Rückseite der Substratfolie oder der Kaschierfolie kommt. Es ist aber auch möglich, die beschichtete Folie zuzuschneiden und die Zuschnitte einzeln oder als Stapel der Weiterverarbeitung zuzuführen. Besonders bevorzugt ist dabei das thermische Verformen der beschichteten Folie zu einer dreidimensionalen Form, wie sie vorbereitend auf ein Hinterspritzen der Folie mit einem thermoplastischen Polymer wie Polycarbonat in einem film insert molding-Verfahren vorgenommen wird. In einer bevorzugten Ausführungsform umfasst der Schritt (iii) das Zuschneiden und thermische Verformen der beschichteten Folie.

Unter Härtung mit aktinischer Strahlung versteht man die radikalische Polymerisation von ethylenisch ungesättigten Kohlenstoff-Kohlenstoff-Doppelbindungen mittels Initiatorradikalen, die durch Bestrahlung mit aktinischer Strahlung beispielsweise aus den vorstehend beschriebenen Fotoinitiatoren freigesetzt werden.

Die Strahlungshärtung erfolgt bevorzugt durch Einwirkung energiereicher Strahlung, also UV-Strahlung oder Tageslicht, zum Beispiel Licht der Wellenlänge von ≥ 200 nm bis ≤ 750 nm, oder durch Bestrahlen mit energiereichen Elektronen (Elektronenstrahlung, zum Beispiel von ≥ 90 keV bis ≤ 300 keV). Als Strahlungsquellen für Licht oder UV-Licht dienen beispielsweise Mittel- oder Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Excimerstrahler sind ebenfalls einsetzbar. Die Strahler können ortsunbeweglich installiert sein, so dass das zu bestrahlende Gut mittels einer mechanischen Vorrichtung an der Strahlungsquelle vorbeibewegt wird, oder die Strahler können beweglich sein, und das zu bestrahlende Gut verändert bei der Härtung seinen Ort nicht. Die üblicherweise zur Vernetzung ausreichende Strahlungsdosis bei UV-Härtung liegt im Bereich von ≥ 80 mJ/cm² bis ≤ 5000 mJ/cm².

In einer bevorzugten Ausführungsform ist die aktinische Strahlung daher Licht im Bereich des UV-Lichtes.

Die Bestrahlung kann gegebenenfalls auch unter Ausschluss von Sauerstoff, zum Beispiel unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des weiteren kann die Bestrahlung erfolgen, indem die Beschichtung mit für die Strahlung transparenten Medien abgedeckt wird. Beispiele hierfür sind Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise oder durch orientierende Vorversuche zu variieren bzw. zu optimieren. Zur Härtung der verformten Folien ist es besonders vorteilhaft, die Härtung mit mehreren Strahlern durchzuführen, deren Anordnung so zu wählen ist, dass jeder Punkt der Beschichtung möglichst die zur Aushärtung optimale Dosis und Intensität an Strahlung erhält. Insbesondere sind nicht bestrahlte Bereiche (Schattenzonen) zu vermeiden.

Weiterhin kann es je nach eingesetzter Folie vorteilhaft sein, die Bestrahlungsbedingungen so zu wählen, dass die thermische Belastung der Folie nicht zu groß wird. Insbesondere dünne Folien sowie Folien aus Materialien mit niedriger Glasübergangstemperatur können zur unkontrollierten Verformung neigen, wenn durch die Bestrahlung eine bestimmte Temperatur überschritten wird. In diesen Fällen ist es vorteilhaft, durch geeignete Filter oder Bauart der Strahler möglichst wenig Infrarotstrahlung auf das Substrat einwirken zu lassen. Weiterhin kann durch Reduktion der entsprechenden Strahlendosis der unkontrollierten Verformung entgegengewirkt werden. Dabei ist jedoch zu beachten, dass für eine möglichst vollständige Polymerisation eine bestimmte Dosis und Intensität der Bestrahlung notwendig sind. Es ist in diesen Fällen besonders vorteilhaft, unter inerten oder sauerstoffreduzierten Bedingungen zu härten, da bei Reduktion des Sauerstoffanteils in der Atmosphäre oberhalb der Beschichtung die erforderliche Dosis zur Aushärtung abnimmt.

Besonders bevorzugt werden zur Härtung Quecksilberstrahler in ortsfesten Anlagen eingesetzt. Fotoinitiatoren werden dann in Konzentrationen von ≥ 0,1 Gew.-% bis ≤ 10 Gew.-%, besonders bevorzugt von ≥ 0,2 Gew.-% bis ≤ 3,0 Gew.-% bezogen auf den Festkörper der Beschichtung eingesetzt. Zur Härtung dieser Beschichtungen wird bevorzugt eine Dosis von ≥ 80 mJ/cm² bis ≤ 5000 mJ/cm² eingesetzt.

Ein optionales Hinterspritzen der beschichteten Folie mit einem thermoplastischem Polymer wie Polycarbonat in einem Schritt (v) nach erfolgter Härtung der Folienbeschichtung und der optionalen, meist gewünschten Umformung der beschichteten Folie ist dem Fachmann durch das film insert molding-Verfahren, wie es beispielsweise in WO 2004/082926 A1 und WO 02/07947 A1 beschrieben ist, wohlbekannt. In einer bevorzugten Ausführungsform des erfindungsgemäßen Verfahrens erfolgt das Hinterschichten der Folie in einem Schritt (v) mittels Extrusion oder Spritzguss, vorzugsweise mit Polycarbonatschmelze. Die Verfahren der Extrusion und des Spritzgusses hierzu sind dem Fachmann wohlbekannt und beispielsweise im "Handbuch Spritzgießen", Friedrich Johannnaber/Walter Michaeli, München; Wien: Hanser, 2001, ISBN 3-446-15632-1 oder "Anleitung zum Bau von Spritzgießwerkzeugen", Menges/Michaeli/Mohren, München; Wien: Hanser, 1999, ISBN 3-446-21258-2 beschrieben.

Nach dem Härten durch Bestrahlung mit UV-Licht weist die beschichtete Oberfläche der auf diese Weise hergestellten beschichteten Polycarbonatfolie dann die erfindungsgemäße Eigenschaftskombination hinsichtlich Kratzfestigkeit, Lösemittelbeständigkeit und Metallisierbarkeit auf. Auf diese Weise können ebenfalls durch das erfindungsgemäße Hinterspritzen der beschichteten Folie mit einem thermoplastischen Polymer, wie es in film insert molding-Verfahren üblich ist, Formkörper hergestellt werden, deren Oberflächen, die aus der erfindungsgemäßen Beschichtung der erfindungsgemäßen Folie bestehen, die gewünschten Eigenschaften wie Kratzfestigkeit, Lösemittelbeständigkeit und Metallisierbarkeit aufweisen.

Die erfindungsgemäße Beschichtung lässt sich mit bekannten Verfahren für die Kunststoffgalvanisierung aus dem Stand der Technik metallisieren. In einer weiteren bevorzugten Ausführungsform umfasst das erfindungsgemäße Verfahren daher einen weiteren Schritt (vi) des Beschichtens der Oberfläche mit einem metallischen Überzug.

Bei diesen Verfahren kann unter anderem die Kunststoffoberfläche zunächst gebeizt werden, um diese aufzurauen bzw. chemisch zu verändern. Dies kann beispielsweise mittels Mineralsäuren, Chromsäure, Schwefelsäure oder sauren bzw. alkalischen Permanganatlösungen erfolgen. Weitere aus dem Stand der Technik bekannte Vorbehandlungsmethoden umfassen eine Plasmabehandlung oder das Behandeln mit oxidierenden Beizen.

So wird beispielsweise durch den Beizvorgang wird die Kunststoffoberfläche derart aufgeraut bzw. chemisch verändert, dass eine Haftung zwischen Kunststoff und Metallüberzug ermöglicht wird. Die gebeizten Kunststoffteile werden gespült und im Anschluss daran aktiviert. Im Stand der Technik sind unterschiedliche Methoden zur Aktivierung der Kunststoffoberflächen bekannt. So ist es beispielsweise bekannt, die Kunststoffoberflächen mit Edelmetallen wie z.B. kolloidalem Palladium, ionogenen Palladium oder Silberkolloiden zu aktivieren. Darüber hinaus ist es bekannt, Metalle, die schwer lösliche Sulfide oder Polysulfide bilden, als Aktivatoren für die Direktmetallisierung einzusetzen. Hierbei haben sich insbesondere Zinn, Blei, Silber, Bismut, Kobalt, Mangan und Kupfer als geeignet erwiesen.

Im Anschluss an die Aktivierung kann entweder ein stromloses Metallisieren der Oberfläche zum Aufbau einer Leitschicht gefolgt von einem anschließenden elektrolytischen Schichtaufbau oder eine direkte chemische Metallabscheidung erfolgen. Bei der Verwendung einer Palladium-Aktivierung erfolgt diese Metallabscheidung üblicherweise aus einem sauren Kupferbad, während bei der Verwendung von Sulfid- bzw. Polysulfidaktivatoren aus einem Nickelbad Metall abgeschieden wird, wie es beispielsweise in der DE 102004026489 B3 beschrieben wird. Weiterhin kann der Schritt (vi) bevorzugt diejenigen Verfahrensschritte umfassen, die in der WO 2012/120007 A1 auf S. 19, Z. 9 bis S. 20, Z. 4 beschrieben sind. Auf diese Textstelle der WO 2012/120007 A1 wird ausdrücklich Bezug genommen und die entsprechende Beschreibung durch Verweis hier mit einbezogen.

In einer bevorzugten Ausführungsform umfasst das erfindungsgemäße Verfahren die Schritte (i), (ii), (iii), (iv) und (v). Auf diese Weise wird ein 3D-Formkörper erhalten, dessen Oberfläche kratzfest und lösemittelbeständig ist und der vorteilhaft metallisierbar ist. Daher umfasst in einer weiteren vorteilhaften Ausgestaltung dieser Ausführungsform das Verfahren den weiteren Schritt (vi). Dadurch wird ein 3D-Formkörper aus Kunststoff mit einer metallischen Oberfläche bereit gestellt. In einer weiteren bevorzugten Ausführungsform umfasst das erfindungsgemäße Verfahren die Schritte (i), (ii), (iii), (iv) und (vi). Dadurch wird eine geformte und mit einem metallischen Überzug versehene Polymerfolie, vorzugsweise eine Polycarbonatfolie, erhalten.

Aufgrund der vorteilhaften Eigenschaftskombination aus Kratzfestigkeit, Lösemittelbeständigkeit und der Metallisierbarkeit der Oberflächen der erfindungsgemäßen beschichteten Folien eignen sich diese Folien in besonderer Weise zur Herstellung von 3D-Kunststoffteilen, insbesondere solchen, die durch film insert molding-Verfahren erhalten werden. Die Oberflächen der Kunststoffteile weisen somit die besonderen Eigenschaften der erfindungsgemäßen Folien auf. Ein weiterer Gegenstand der vorliegenden Erfindung ist daher ein 3D-Kunststoffteil, umfassend die erfindungsgemäße beschichtete Folie, insbesondere die beschichtete Polycarbonatfolie, bevorzugt mit einer Metallschicht auf der beschichteten Folie. In einer besonders bevorzugten Ausführungsform ist das 3D-Kunststoffteil gemäß der vorliegenden Erfindung erhältlich durch ein film insert molding-Verfahren. Solche Verfahren umfassen das Hinterspritzen, beispielsweise durch Spritzguss, der erfindungsgemäßen beschichteten Polycarbonat-Folien mit einem thermoplastischen Polymer, insbesondere mit Polycarbonat.

Daher ist ein weiterer Gegenstand der vorliegenden Erfindung die Verwendung der erfindungsgemäßen beschichteten Folie, insbesondere der erfindungsgemäß beschichteten Polycarbonat-Folie zur Herstellung von Kunststoffteilen in film insert molding-Verfahren. In einer besonders bevorzugten Ausführungsform umfasst die erfindungsgemäße Verwendung, wie im Anspruch 13 definiert, Herstellung von Kunststoffteilen für die Auto-, Transport-, Elektro-, Elektronik- und Bauindustrie in film insert molding-Verfahren.

Ein weiterer Gegenstand der vorliegenden Erfindung ist somit ein Formteil, umfassend mindestens eine beschichtete Folie gemäß der vorliegenden Erfindung, insbesondere ein Formteil, wobei die Beschichtung der beschichteten Folie mindestens eine Metallschicht auf der Oberfläche umfasst.

### Beispiele:

### Bewertungsmethoden

### Schichtdicke

Die Schichtdicke der Beschichtungen wurde durch Beobachtung der Schnittkante in einem optischem Mikroskop des Typs Axioplan des Herstellers Zeiss gemessen. Methode - Auflicht, Hellfeld, Vergrößerung 500x.

### Bewertung der Blockfestigkeit

Zur Simulation der Blockfestigkeit von aufgerollten vorgetrockneten beschichteten Folien reichen klassische Prüfmethoden wie etwa in DIN 53150 beschrieben nicht aus, weshalb auf nachfolgende Prüfung zurückgegriffen wurde: Die Beschichtungsmaterialien wurden mit einer handelsüblichen Rakel (Sollnassschichtdicke 100 µm) auf Makrofol DE 1-1 (375 µm) aufgetragen. Nach einer Ablüftphase von 10 min bei 20 °C bis 25 °C wurde die beschichteten Folien für 10 min bei 110 °C in einem Umluftofen getrocknet. Nach einer Abkühlphase von 1 min wurde eine handelsübliche Haftkaschierfolie GH-X173 natur (Hersteller Bischof u. Klein, Lengerich, Deutschland) mit einer Kunststoffwalze auf eine Fläche von 100 mm x 100 mm faltenfrei auf der getrockneten beschichteten Folie aufgebracht. Anschließend wurde das kaschierte Folienstück flächig mit einem Gewicht von 10 kg für 1 Stunde belastet. Danach wurde die Kaschierfolie entfernt und die beschichtete Oberfläche visuell beurteilt.

### Bewertung der Bleistifthärte

Die Bleistifthärte wurde analog ASTM D 3363 unter Verwendung eines Elcometer 3086 Scratch boy (Elcometer Instruments GmbH, Aalen, Deutschland) bei einer Belastung von 500 g, wenn nicht anders angegeben, gemessen.

### Bewertung der Stahlwolle-Verkratzung

Die Stahlwolle-Verkratzung wurde bestimmt, indem eine Stahlwolle No. 00 (Oskar Weil GmbH Rakso, Lahr, Deutschland) auf das flächige Ende eines 500 g Schlosser-Hammers geklebt wurde, wobei die Fläche des Hammers 2,5 cm x 2,5 cm, d.h. ca. 6,25 cm² beträgt. Der Hammer wurde ohne zusätzlichen Druck auf die zu prüfende Fläche aufgesetzt, so dass eine definierte Belastung von ca. 560 g erreicht wurde. Der Hammer wurde dann 10 mal in Doppelhüben vor und zurück bewegt. Nachfolgend wurde die belastete Oberfläche mit einem weichen Tuch von Geweberückständen und Lackpartikeln gereinigt. Die Verkratzung wurde durch Haze- und Glanzwerte charakterisiert, gemessen quer zur Verkratzungsrichtung mit einem Micro HAZE plus (20°-Glanz und Haze; Byk-Gardner GmbH, Geretsried, Deutschland). Die Messung erfolgte vor und nach Verkratzung. Angegeben werden die Differenzwerte bei Glanz und Haze vor und nach Belastung als ΔGlanz und ΔHaze.

### Bewertung der Lösemittelbeständigkeit

Die Lösemittelbeständigkeit der Beschichtungen wurde üblicherweise mit Isopropanol, Xylol, 1-Methoxy-2-propylacetat, Ethylacetat, Aceton in technischer Qualität geprüft. Die Lösemittel wurden mit einem damit durchnässten Wattebausch auf die Beschichtung aufgetragen und durch Abdecken gegen Verdunstung geschützt. Es wurde, wenn nicht anders beschrieben, eine Einwirkzeit von 60 Minuten bei ca. 23 °C eingehalten. Nach dem Ende der Einwirkzeit wurde der Wattebausch entfernt und die Prüffläche mit einem weichen Tuch sauber gewischt. Die Abmusterung erfolgte sofort visuell und nach leichten Kratzen mit dem Fingernagel.

Folgende Stufen werden unterschieden:
- 0 = unverändert; keine Veränderung sichtbar; durch Kratzen nicht verletzbar.
- 1 = leichte Anquellung sichtbar, aber durch Kratzen nicht verletzbar.
- 2 = Veränderung deutlich sichtbar, durch Kratzen kaum verletzbar.
- 3 = merklich verändert nach festem Fingernageldruck oberflächlich zerstört.
- 4 = stark verändert nach festem Fingernageldruck bis zum Untergrund durchgekratzt.
- 5 = zerstört; schon beim Abwischen der Chemikalie wird der Lack zerstört; die Testsubstanz ist nicht entfernbar (eingefressen).

Innerhalb dieser Bewertung wird der Test mit den Kennwerten 0 und 1 üblicherweise bestanden. Kennwerte > 1 stehen für ein "nicht bestanden".

### Beispiel 1: Herstellung eines Beschichtungsmittels

117 g Novodur®N H604 (Hersteller Styrolution) wurden in 284 g einer Mischung (2:3) aus 1-Methoxy-2-propanol und Diacetonalkohol bei 100 °C in ca. 3 h homogen verteilt. Die auf diese Weise erhaltene stabile kolloidale Lösung wurde bis auf ca. 30 °C abgekühlt. Separat wurden in 166 g der Mischung (2:3) aus 1-Methoxy-2-propanol und Diacetonalkohol bei Raumtemperatur folgende Komponenten gelöst: 117 g Dipentaerythrit-penta/hexaacrylat (DPHA, Hersteller Cytec), 4,7 g Esacure One (Hersteller Lamberti), 2,35 g Darocur 4265 (Hersteller BASF) und 0,25 g BYK 333 (Hersteller BYK). Die zweite Lösung wurde der Polymerlösung unter Rühren zugegeben. Das erhaltene Beschichtungsmittel wurde noch 3 h bei Raumtemperatur und unter Abschirmung des direkten Lichteinflusses gerührt, abgefüllt und 1 Tag ruhen gelassen. Die Ausbeute betrug 665 g, die Viskosität (23°C, DIN EN ISO 3219) 1050 mPas, der Feststoffgehalt 35 Gew.-% und die berechnete Doppelbindungsdichte im Feststoffanteil des Lackes ca. 5,1 mol/kg.

### Beispiel 2: Prüfung der Löslichkeit verschiedener ABS-Produkte

Für die Prüfung wurden verschiedene kommerziell erhältliche ABS-Produkte verwendet. Die Löslichkeit wurde in einer Mischung (2:3) von 1-Methoxy-2-propanol (MP-ol) und Diacetonalkohol (DAA) geprüft. Für die Prüfung wurde eine anwendungsrelevante Konzentration von jeweils 20 Gew.-% des Polymers in Lösemittel angepeilt. Der Lösungsversuch wurde 4 h bei 120 °C unter Rühren durchgeführt. Dann wurde ein Zwischenergebnis registriert. Die Lösung wurde dann bis auf Raumtemperatur abkühlen gelassen und das endgültige Ergebnis wurde registriert.

| | Zusammensetzung, Gew.-% | | | MP-ol/DAA=2:3 | |
|---|---|---|---|---|---|
| | Acryl-nitril | Styrol | Polybutadien | 120°C | 20°C |
| Novodur N H950 | 40^{#} | 43^{#} | 17^{#} | zwei Phasen | zwei Phasen |
| Novodur N H604 | 23^{#} | 61^{#} | 16^{#} | homogene trübe Abmischung | homogene trübe Abmischung |
| Magnum 3404 | 24^{#} | 66^{#} | 10^{#} | homogene trübe Abmischung | homogene trübe Abmischung |
| Magnum 3904 | 23^{#} | 62^{#} | 15^{#} | homogene trübe Abmischung | homogene trübe Abmischung |
| Magnum 3616 | 24^{#} | 62^{#} | 14^{#} | homogene trübe Abmischung | homogene trübe Abmischung |
| Magnum 8391 | 24^{#} | 65^{#} | 11^{#} | homogene trübe Abmischung | homogene trübe Abmischung |
| Magnum 8434 | 22^{#} | 67^{#} | 11^{#} | homogene trübe Abmischung | homogene trübe Abmischung |

| | | | | | |
|---|---|---|---|---|---|
| ^{#}Bestimmung durch IR-Spektroskopie; Novodur® ist eine Handelsmarke der Hersteller Styrolution; Magnum® ist eine Handelsmarke der Hersteller Styron. | | | | | |

Dadurch konnte gezeigt werden, dass ABS-Copolymere auf Styrol-Basis mit einem Acrylnitril-Anteil von weniger als 30 Gew.-% sich besonders gut in gemäß der vorliegenden Erfindung bevorzugten Lösemittelmischungen aus 1-Methoxy-2-propanol und Diacetonalkohol lösen. Dadurch werden ABS-Copolymere mit einem Acrylnitril-Anteil im Bereich von ≥ 20 Gew.-% bis ≤ 30 Gew.-%, insbesondere im Bereich von ≥ 22 Gew.-% bis ≤ 25 Gew.-%, und insbesondere in Kombination mit einem Anteil des Polybutadiens im Bereich von ≥ 10 Gew.-% bis ≤ 16 Gew.-% im Rahmen der vorliegenden Erfindung besonders bevorzugt, insbesondere in Kombination mit einem Lösungsmittelgemisch aus 1-Methoxy-2-propanol und Diacetonalkohol.

### Beispiel 3: Beschichtung von Folien

Beschichtungsmittel gemäß Beispiel 1 wurden mittels eines Schlitzgießers des Herstellers TSE Troller AG auf eine Trägerfolie wie beispielsweise Makrofol DE 1-1 (Bayer MaterialScience AG, Leverkusen, Deutschland), aufgetragen. Die Schichtstärke der Trägerfolie betrug 250 µm.

Typische Antragsbedingungen waren dabei wie folgt:
- Bahngeschwindigkeit 1,3 bis 2,0 m/min
- Nasslackauftrag 20 - 150 µm
- Umlufttrockner 90 - 110 °C, bevorzugt im Bereich der T_{G} des zu trocknenden Polymers.
- Verweilzeit im Trockner 3,5 - 5 min.

Die Beschichtung erfolgte Rolle auf Rolle, das heißt, dass die Polycarbonatfolie in der Beschichtungsanlage abgerollt wurde. Die Folie wurde durch eines der oben genannten Antragsaggregate geführt und mit der Beschichtungslösung beaufschlagt. Danach wurde die Folie mit der nassen Beschichtung durch den Trockner gefahren. Nach Ausgang aus dem Trockner wurde die jetzt trockene Beschichtung üblicherweise mit einer Kaschierfolie versehen, um diese vor Verschmutzung und Verkratzung zu schützen. Danach wurde die Folie wieder aufgerollt.

Für die Prüfung der Endeigenschaften des Produktes kann die beschichtete Folie nach Ausgang aus dem Trockner vorerst mit UV-Lampe ausgehärtet und dann mit einer Kaschierfolie versehen werden.

### Beispiel 4: Überprüfung der Blockfestigkeit

Die beschichteten Seiten der in Beispiel 3 erzeugten, nicht mit UV ausgehärteten Folien wurden mit einer Kaschierfolie vom Typ GH-X 173 A (Bischof + Klein, Lengerich, Deutschland) abgedeckt und 1 h bei ca. 23 °C mit einer Aluminiumplatte in den Maßen 4,5 x 4,5 cm² und einem Gewicht von 2 kg beaufschlagt. Danach wurden das Gewicht und die Kaschierfolie entfernt und die Oberfläche der Beschichtung visuell auf Veränderungen geprüft.

**Tabelle 1: Blockfestigkeit der Beschichtungen**

| Beschichtungsmittel | Schichtdicke auf 250 µm PC-Folie | Blockfestigkeit |
|---|---|---|
| Beispiel 1 | 8 µm | i.O. |
| Beispiel 1 | 13 µm | i.O. |
| Beispiel 1 | 18 µm | i.O. |
| Beispiel 1 | 24 µm | i.O. |

### Beispiel 5: Formen der beschichteten Folien und Härten der Beschichtungen

Die HPF-Verformungsversuche wurden auf einer SAMK 360 - Anlage ausgeführt. Das Werkzeug wurde auf 100 °C elektrisch beheizt. Die Folienaufheizung wurde mittels IR Strahler bei 240, 260 und 280 °C vorgenommen. Die Heizzeit betrug 16 Sekunden. Es wurde eine Folientemperatur von ca. 170 °C erreicht. Die Verformung erfolgte bei einem Verformungsdruck von 100 bar. Das Verformungswerkzeug war eine Heizungs-/Lüftung-Blende (HL-Blende).

Der entsprechende Folienbogen wurde auf einer Palette positionsgenau fixiert. Die Palette fuhr durch die Verformungsstation in die Heizzone und verweilte dort die eingestellte Zeit (16 s). Dabei wurde die Folie so aufgeheizt, dass die Folie kurzzeitig eine Temperatur oberhalb des Erweichungspunktes erfuhr, der Kern der Folie war ca. 10-20 °C kälter. Dadurch war die Folie relativ stabil, wenn sie in die Verformungsstation eingefahren wird.

In der Verformungsstation wurde die Folie durch Zufahren des Werkzeuges über dem eigentlichen Werkzeug fixiert, gleichzeitig wurde mittels Gasdruck die Folie über das Werkzeug geformt. Die Druckhaltezeit von 7 s sorgte dafür, dass die Folie das Werkzeug passgenau abformte. Nach der Haltezeit wurde der Gasdruck wieder entlastet. Das Werkzeug öffnete sich und die umgeformte Folie wurde aus der Verformungsstation herausgefahren.

Die Folie wurde anschließend von der Palette entnommen und konnte nun mit UV-Licht ausgehärtet werden.

Mit dem verwendeten Werkzeug wurden Radien bis herunter auf 1 mm abgebildet.

Die UV-Härtung der erfindungsgemäßen Beschichtung wurde mit einer Quecksilberdampf-Hochdrucklampe vom Type evo 7 dr (ssr engineering GmbH, Lippstadt, Deutschland) ausgeführt. Diese Anlage ist ausgestattet mit dichroitischem Reflektoren und Quarzscheiben und hat eine spezifische Leistung von 160 W/cm. Es wurde eine UV-Dosis von 2,0 J/cm² und eine Intensität von 1,4 W/cm² appliziert. Die Oberflächentemperatur sollte > 60 °C erreichen.

Die Angaben zur UV-Dosis wurden mit einem Lightbug ILT 490 (International Light Technologies Inc., Peabody MA, USA) ermittelt. Die Angaben zur Oberflächentemperatur wurden mit Temperatur-Teststreifen der Marke RS (Bestellnummer 285-936; RS Components GmbH, Bad Hersfeld, Deutschland) ermittelt.

Ergebnisse zur Beständigkeit der Beschichtungen, die unter Verwendung der genannten Bedingungen vernetzt wurden, sind Tabelle 2 zu entnehmen.

**Tabelle 2: Chemikalien- und Kratzbeständigkeit der Beschichtungen**

| Beschichtungsmittel/ Schichtdicke auf 250 µm PC-Folie | Lösemittel | Bleistifthärte | Stahlwolle (Hersteller Rakso, No. 00) | Haze |
|---|---|---|---|---|
| | IP/MPA/X/EA/Ac 1h/RT | 500 g Mitsubishi | 560 g / 10 DH ΔG / ΔH | |
| Beispiel 1 /8µm | 0/0/0/0/0 | HB | 6/0 | 1,36 |
| Beispiel 1 /13µm | 0/0/0/0/0 | HB | 7/18 | 2,82 |
| Beispiel 1 /18µm | 0/0/0/0/0 | F-H | 12/24 | 4,27 |
| Beispiel 1 /24µm | 0/0/0/0/0 | F-H | 10/5 | 7,66 |
| Makrofol DE 1-1 250µm | 0/5/5/5/5 | 3B | 100 / 285 | - |

IP/MPA/X/EA/Ac steht für Isopropanol, 1-Methoxy-2-propylacetat, Xylol, Ethylacetat, Aceton RT steht für Raumtemperatur, hier ca. 23°C. Makrofol DE 1-1, 250 µm ist eine unbeschichtete Polycarbonat-Folie (Hersteller Bayer MaterialScience).

Wie die Tabelle 2 zeigt, verbessert die erfindungsgemäße Beschichtung sogar in dünner Schicht die Bleistifthärte und Kratzfestigkeit der Folie deutlich gegenüber den bekannten Eigenschaften des Polycarbonats. Die Beschichtung verleiht auch eine hohe Lösemittelbeständigkeit. Gegenüber extrudierten ABS-Schichten ist die optische Trübung (Haze) der ABS-Schicht durch entsprechend dünne Beschichtung signifikant zu reduzieren, ohne dass die Metallisierbarkeit verloren geht.

### Beispiel 6: Metallisieren (Galvanisieren)

Die Aufrauhung der Oberfläche des ABS-Kunststoffs erfolgte in einer Chromschwefelsäurebeize, wobei die Arbeitstemperatur 60 °C betrug. Die Tauchzeit lag bei 10 Minuten. Es wird angenommen, dass während dieses Vorgangs ein Bestandteil des ABS, der Butadien-Kautschuk, unter Oxidation aus der Oberfläche herausgelöst wurde, und dass auf diese Weise Kavernen im mikroskopischen Bereich entstanden sind. Danach wurden die Teile intensiv mit Wasser und mit Natriumhydrogensulfit-Lösung gespült.

In die entstandenen Kavitäten wurden mit den in der DE 10 2004 026 489 B3 beschriebenen Verfahren Palladiumkeime als Aktivator eingelagert, die die anschließende chemische Vernicklung im Nickelbad (Nickelsulfat; Ammoniak und Natriumhypophosphit) katalysierten, wie es in der WO 2012/120007 A1, S. 19, Z.30 bis S. 20, Z. 4 beschrieben ist. So wurde eine erste dünne, leitfähige Nickelschicht erhalten, welche durch das Auffüllen der Kavitäten eine sehr gute mechanische Verzahnung zum Kunststoff aufwies und entsprechend gut haftete.

Auf dieser leitfähigen Schicht können dann elektrochemisch weitere Metallschichten abgeschieden werden.

Im HPF-Verfahren hergestellte geformte Folien mit der erfindungsgemäßen Beschichtung, UVgehärtet und mit Thermoplast hinterspritzt zeigen nach obiger Behandlung eine homogene leitfähige Nickelschicht.

Wie in den Beispielen klar gezeigt wurde, weisen die erfindungsgemäßen beschichteten Folien kratzfeste und lösemittelbeständige Oberflächen auf. Des Weiteren sind diese Oberflächen gut in den gängigen Verfahren metallisierbar. Damit sind das erfindungsgemäße Beschichtungsmittel und die erfindungsgemäßen Folien hervorragend geeignet zur Herstellung von Formkörpern mit metallischen Oberflächen aller Art, insbesondere durch film insert molding-Verfahren.

## Patentansprüche

1. Beschichtungsmittel, umfassend
(a) mindestens ein thermoplastisches Acrylonitril-Butadien-Styrol-Copolymer in einem Gehalt von mindestens 30 Gew.-% des Festanteils des Beschichtungsmittels;
(b) mindestens einen UV-härtbaren Reaktivverdünner in einem Gehalt von mindestens 30 Gew.-% des Festanteils des Beschichtungsmittels;
(c) mindestens einen Fotoinitiator in einem Gehalt von ≥ 0,1 bis ≤ 10 Gewichtsteilen des Festanteils des Beschichtungsmittels; und
(d) mindestens ein organisches Lösungsmittel,
wobei der Anteil an ethylenisch ungesättigten Gruppen mindestens 3 mol pro kg des Festanteils des Beschichtungsmittels beträgt, und wobei das Acrylonitril-Butadien-Styrol-Copolymer (a) einen Acrylnitril-Anteil im Bereich von ≥ 19 % und ≤ 35 % aufweist.

2. Beschichtungsmittel gemäß Anspruch 1, wobei das Acrylonitril-Butadien-Styrol-Copolymer (a) einen Acrylnitril-Anteil im Bereich von ≥ 20 % und ≤ 30 % aufweist.

3. Beschichtungsmittel gemäß Anspruch 1 oder Anspruch 2, wobei das Acrylonitril-Butadien-Styrol-Copolymer (a) einen Polybutadien-Anteil im Bereich von ≥ 10 % und ≤ 16 % aufweist.

4. Beschichtungsmittel gemäß mindestens einem der vorstehenden Ansprüche, wobei das Acrylonitril-Butadien-Styrol-Copolymer (a) eine Vicaterweichungstemperatur VET gemäß ISO 306 von mindestens 95 °C aufweist.

5. Beschichtungsmittel gemäß mindestens einem der vorstehenden Ansprüche, wobei der mindestens eine UV-härtbare Reaktivverdünner (b) bifunktionelle, trifunktionelle, tetrafunktionelle, pentafunktionelle und/oder hexafunktionelle Acryl- und/oder Methacrylmonomere umfasst.

6. Beschichtungsmittel gemäß mindestens einem der vorstehenden Ansprüche, wobei das Lösungsmittel (d) ausgewählt ist aus 1-Methoxy-2-propanol, Diacetonalkohol, 2,2,3,3-Tetrafluoropropanol und Gemischen davon.

7. Beschichtungsmittel gemäß mindestens einem der vorstehenden Ansprüche, wobei das Lösungsmittel (d) ein Gemisch aus 1-Methoxy-2-propanol und mindestens 50 Gew.-% Diacetonalkohol umfasst.

8. Beschichtete Folie, umfassend eine Folie aus einem thermoplastischen Polymer und einer Beschichtung, die erhältlich ist durch Beschichten mit einem Beschichtungsmittel gemäß mindestens einem der Ansprüche 1 bis 7.

9. Beschichtete Folie gemäß Anspruch 8, umfassend eine Polycarbonat-Folie oder eine Copolycarbonat-Folie.

10. Beschichtete Folie gemäß Anspruch 8 oder Anspruch 9, weiter umfassend eine Metallteilbeschichtung oder eine Metallschicht auf der beschichteten Oberfläche.

11. Beschichtete Folie gemäß Anspruch 10, wobei die Metallschicht mindestens ein Metall umfasst, das ausgewählt ist aus der Gruppe bestehend aus Zinn, Blei, Silber, Gold, Palladium, Platin, Kobalt, Mangan, Bismut, Kupfer, Nickel, Eisen, Chrom sowie Gemischen davon.

12. Verfahren zur Herstellung einer beschichteten Folie, umfassend die Schritte
(i) Beschichten einer Folie mit einem Beschichtungsmittel gemäß mindestens einem der Ansprüche 1 bis 7;
(ii) Trocknen der Beschichtung;
(iii) gegebenenfalls zurechtschneiden, dekaschieren, bedrucken und/oder thermisches oder mechanisches Verformen der Folie;
(iv) Bestrahlen der Beschichtung mit UV-Strahlung, dabei Härten der Beschichtung.

13. Verwendung des Beschichtungsmittels gemäß mindestens einem der Ansprüche 1 bis 7 oder der beschichteten Folie gemäß mindestens einem der Ansprüche 8 bis 11 zur Herstellung von 3D-Formkörpern für die Auto-, Transport-, Elektro-, Elektronik- und Bauindustrie in einem film insert molding-Verfahren.

14. Formteil, umfassend mindestens eine beschichtete Folie gemäß mindestens einem der Ansprüche 8 bis 11.

## Claims

1. Coating composition comprising
(a) at least one thermoplastic acrylonitrile-butadiene-styrene copolymer in a content of at least 30% by weight of the solids content of the coating composition;
(b) at least one UV-curable reactive diluent in a content of at least 30% by weight of the solids content of the coating composition;
(c) at least one photoinitiator in a content of ≥ 0.1 to ≤ 10 parts by weight of the solids content of the coating composition; and
(d) at least one organic solvent,
wherein the proportion of ethylenically unsaturated groups is at least 3 mol per kg of the solids content of the coating composition, and wherein the acrylonitrile-butadiene-styrene copolymer (a) has an acrylonitrile content in the range of ≥ 19% and ≤ 35%.

2. Coating composition according to Claim 1, wherein the acrylonitrile-butadiene-styrene copolymer (a) has an acrylonitrile content in the range of ≥ 20% and ≤ 30%.

3. Coating composition according to Claim 1 or Claim 2, wherein the acrylonitrile-butadiene-styrene copolymer (a) has a polybutadiene content in the range of ≥ 10% and ≤ 16%.

4. Coating composition according to at least one of the preceding claims, wherein the acrylonitrile-butadiene-styrene copolymer (a) has a Vicat softening temperature VET to ISO 306 of at least 95°C.

5. Coating composition according to at least one of the preceding claims, wherein the at least one UV-curable reactive diluent (b) comprises bifunctional, trifunctional, tetrafunctional, pentafunctional and/or hexafunctional acrylic and/or methacrylic monomers.

6. Coating composition according to at least one of the preceding claims, wherein the solvent (d) is selected from 1-methoxy-2-propanol, diacetone alcohol, 2,2,3,3-tetrafluoropropanol and mixtures thereof.

7. Coating composition according to at least one of the preceding claims, wherein the solvent (d) comprises a mixture of 1-methoxy-2-propanol and at least 50% by weight of diacetone alcohol.

8. Coated film comprising a film of a thermoplastic polymer and a coating obtainable by coating with a coating composition according to at least one of Claims 1 to 7.

9. Coated film according to Claim 8, comprising a polycarbonate film or a copolycarbonate film.

10. Coated film according to Claim 8 or Claim 9, further comprising a partial metal coating or a metal layer on the coated surface.

11. Coated film according to Claim 10, wherein the metal layer comprises at least one metal selected from the group consisting of tin, lead, silver, gold, palladium, platinum, cobalt, manganese, bismuth, copper, nickel, iron, chromium and mixtures thereof.

12. Process for producing a coated film, comprising the steps of:
(i) coating a film with a coating composition according to at least one of Claims 1 to 7;
(ii) drying the coating;
(iii) optionally cutting the film to size and/or delaminating, printing and/or thermally or mechanically forming the film;
(iv) irradiating the coating with UV radiation to cure the coating.

13. Use of the coating composition according to at least one of Claims 1 to 7 or of the coated film according to at least one of Claims 8 to 11 for production of 3D mouldings for the automotive, transport, electricals, electronics and construction industries in a film insert moulding process.

14. Moulded component comprising at least one coated film according to at least one of Claims 8 to 11.

## Revendications

1. Agent de revêtement, comprenant:
(a) au moins un copolymère d'acrylonitrile-butadiène-styrène thermoplastique en une teneur d'au moins 30 % en poids de la teneur en solides de l'agent de revêtement ;
(b) au moins un diluant réactif durcissable par UV en une teneur d'au moins 30 % en poids de la teneur en solides de l'agent de revêtement ;
(c) au moins un photoinitiateur en une teneur de ≥ 0,1 à ≤ 10 parties en poids de la teneur en solides de l'agent de revêtement ; et
(d) au moins un solvant organique,
la proportion de groupes éthyléniquement insaturés étant d'au moins 3 moles par kg de la teneur en solides de l'agent de revêtement et le copolymère d'acrylonitrile-butadiène-styrène (a) présentant une proportion d'acrylonitrile dans la plage allant de ≥ 19 % à ≤ 35 %.

2. Agent de revêtement selon la revendication 1, dans lequel le copolymère d'acrylonitrile-butadiène-styrène (a) présente une proportion d'acrylonitrile dans la plage allant de ≥ 20 % à ≤ 30 %.

3. Agent de revêtement selon la revendication 1 ou la revendication 2, dans lequel le copolymère d'acrylonitrile-butadiène-styrène (a) présente une proportion de polybutadiène dans la plage allant de ≥ 10 % à ≤ 16 %.

4. Agent de revêtement selon au moins l'une quelconque des revendications précédentes, dans lequel le copolymère d'acrylonitrile-butadiène-styrène (a) présente une température de ramollissement de Vicat VET selon ISO 306 d'au moins 95 °C.

5. Agent de revêtement selon au moins l'une quelconque des revendications précédentes, dans lequel ledit au moins un diluant réactif durcissable par UV (b) comprend des monomères acryliques et/ou méthacryliques bifonctionnels, trifonctionnels, tétrafonctionnels, pentafonctionnels et/ou hexafonctionnels.

6. Agent de revêtement selon au moins l'une quelconque des revendications précédentes, dans lequel le solvant (d) est choisi parmi le 1-méthoxy-2-propanol, l'alcool diacétonique, le 2,2,3,3-tétrafluoropropanol et leurs mélanges.

7. Agent de revêtement selon au moins l'une quelconque des revendications précédentes, dans lequel le solvant (d) comprend un mélange de 1-méthoxy-2-propanol et d'au moins 50 % en poids d'alcool diacétonique.

8. Film revêtu, comprenant un film en un polymère thermoplastique et un revêtement, qui peut être obtenu par revêtement avec un agent de revêtement selon au moins l'une quelconque des revendications 1 à 7.

9. Film revêtu selon la revendication 8, comprenant un film de polycarbonate ou un film de copolycarbonate.

10. Film revêtu selon la revendication 8 ou la revendication 9, comprenant en outre un revêtement métallique partiel ou une couche métallique sur la surface revêtue.

11. Film revêtu selon la revendication 10, dans lequel la couche métallique comprend au moins un métal qui est choisi dans le groupe constitué par l'étain, le plomb, l'argent, l'or, le palladium, le platine, le cobalt, le manganèse, le bismuth, le cuivre, le nickel, le fer, le chrome et leurs mélanges.

12. Procédé de fabrication d'un film revêtu, comprenant les étapes suivantes:
(i) le revêtement d'un film avec un agent de revêtement selon au moins l'une quelconque des revendications 1 à 7 ;
(ii) le séchage du revêtement;
(iii) éventuellement la découpe aux dimensions, le délaminage, l'impression et/ou le façonnage thermique ou mécanique du film ;
(iv) l'exposition du revêtement à un rayonnement UV, et ainsi le durcissement du revêtement.

13. Utilisation de l'agent de revêtement selon au moins l'une quelconque des revendications 1 à 7 ou du film revêtu selon au moins l'une quelconque des revendications 8 à 11 pour la fabrication de corps moulés 3D pour l'industrie automobile, des transports, électrique, électronique et du bâtiment dans un procédé de moulage par insertion de film.

14. Pièce moulée, comprenant au moins un film revêtu selon au moins l'une quelconque des revendications 8 à 11.
